# EUROPÄISCHE PATENTSCHRIFT

(11) **EP 3 548 361 B1**
(45) Veröffentlichungstag und Bekanntmachung des Hinweises auf die Patenterteilung: **11.11.2020**
(21) Anmeldenummer: 17818061.8
(22) Anmeldetag: 30.11.2017
(51) Int. Cl.: B62D 1/04, B62D 1/06

(54) **LENKRADSKELETT UND FAHRZEUGLENKRAD MIT EINEM SOLCHEN LENKRADSKELETT**
STEERING WHEEL CORE FOR A VEHICLE AND A STEERING WHEEL WITH SUCH A CORE
NOYAU D'UN VOLANT POUR VOITURE ET UN VOLANT AVEC UN TEL NOYAU

(30) Priorität: 30.11.2016 DE 102016123177
(43) Veröffentlichungstag der Anmeldung: 09.10.2019
(73) Patentinhaber: Dalphi Metal España, S.A., 36213 Vigo (ES); PSA Automobiles SA, 78300 Poissy (FR)
(72) Erfinder: OLLERO OLLERO, Jorge, 36210 Vigo (ES); LEMA, Xabier, 15178 Oleiros (ES); LOIS MARTÍNEZ, Carlos, 36201 Vigo (ES); MOURE FERNÁNDEZ, Marcelino, 36350 Nigrán (ES); CONDE BOUZA, Fabián, 36340 Nigrán (ES); CARBALLIDO, Rafael, 36206 Vigo - Pontevedra (ES); BAUVINEAU, Laurent, 92160 Antony (FR); LEMELE, Clément, 92370 Chaville (FR); RICHEUX GUILLOUX, Nathalie, 91430 Igny (FR)
(74) Vertreter: ZF Patentabteilung - DIPS
(86) Internationale Anmeldenummer: PCT/EP2017/080930
(87) Internationale Veröffentlichungsnummer: WO 2018/100038

(56) Entgegenhaltungen:
- DE-A1-102010 055 589
- DE-U1-202014 007 664
- JP-A- S59 120 569

## Beschreibung

Die Erfindung betrifft ein Lenkradskelett für ein Fahrzeuglenkrad sowie ein Fahrzeuglenkrad mit einem solchen Lenkradskelett.

Fahrzeuglenkräder weisen derzeit üblicherweise eine Nabe und einen geschlossen umlaufenden Lenkradkranz auf, der über Speichen mit der Nabe verbunden ist. Aus dem Stand der Technik sind zahlreiche Lenkradformen bekannt, welche sich beispielsweise durch die Anzahl der Speichen zwischen Nabe und Lenkradkranz unterscheiden.

Die DE 20 2014 007 664 U1 zeigt ein umkonfigurierbares Lenkrad mit einem Lenkradtopf zur Fixierung des Lenkrads an einer Lenksäule eines Kraftfahrzeugs, einer durch den Lenkradtopf verlaufenden Lenkradachse, mindestens einem Griffbereich, der auf mindestens zwei entgegengesetzten Seiten des Lenkradtopfes von diesem beabstandet angeordnet ist, und mindestens einer Speiche, die den Lenkradtopf mit dem Griffbereich verbindet. Der Griffbereich weist einen oberen sowie einen unteren Griffabschnitt auf, wobei der untere Griffabschnitt relativ zum oberen Griffabschnitt zwischen einer ersten und einer zweiten Position parallel zur Lenkradachse verschiebbar ist, und wobei der untere Griffabschnitt in der zweiten Position näher an der Lenksäule angeordnet ist als in der ersten Position und als der obere Griffabschnitt. DE 20 2014 007664 U1 zeigt also ein Lenkradskelett nach dem Oberbegriff des Anspruchs 1.

In der DE 10 2010 055 589 A1 ist ein Lenkrad für ein Fahrzeug dargestellt, mit einer Nabe und einem Lenkradkranz, welcher ein unteres und zwei obere Kranzteile aufweist. Die beiden oberen Kranzteile sind gegenüber dem unteren Kranzteil bewegbar und können gemeinsam mit ihren Speichen in Umfangsrichtung um die Nabe herum in eine Offenstellung des Lenkradkranzes verschwenkt werden.

Ferner offenbart die JP S59-120569 A ein Lenkrad, welches ein gattungsgemäßes Lenkradskelett aufweist. Um das Lenkradgewicht gering zu halten, ist das Kernmaterial des Lenkradskeletts aus einem leichten, formstabilen Material sowie einem faserverstärkten Kunststoffüberzug hergestellt.

Aufgabe der Erfindung ist es, ein konstruktiv einfach aufgebautes Lenkradskelett sowie ein Fahrzeuglenkrad mit einem solchen Lenkradskelett zu schaffen, das ein besonders geringes Gewicht aufweist.

Erfindungsgemäß wird diese Aufgabe gelöst durch ein Lenkradskelett für ein Fahrzeuglenkrad, mit einer Lenkradachse, einer Nabe zur Befestigung des Fahrzeuglenkrads an einer um die Lenkradachse drehbaren Lenkwelle, und einem Lenkradkranz, der sich von einem ersten axialen Ende über einen ersten axialen Endabschnitt, einen Kranzabschnitt und einen zweiten axialen Endabschnitt bis zu einem entgegengesetzten zweiten axialen Ende erstreckt, wobei der Kranzabschnitt radial von der Nabe beabstandet ist sowie die Nabe in Umfangsrichtung umgibt, und wobei wenigstens ein axiales Ende des Lenkradkranzes fest mit der Nabe verbunden ist. Der Lenkradkranz ist somit kein geschlossener Ring, der die Nabe bei herkömmlichen Lenkradkonstruktionen in einem vorgegebenen, üblicherweise nahezu konstanten Abstand umschließt, sondern weist zumindest ein axiales Ende auf, das direkt an der Nabe befestigt ist. Auf diese Weise muss keine separate Speiche zur Verbindung der Nabe mit dem Lenkradkranz vorgesehen werden, da die Speiche funktional bereits in den Lenkradkranz integriert ist. Dies führt zu einer besonders einfachen Konstruktion des Lenkradskeletts und ermöglicht eine besonders leichte Bauweise des Fahrzeuglenkrads.

In einer Ausführungsform des Lenkradskeletts erstreckt sich in axialer Draufsicht zumindest ein axialer Endabschnitt im Wesentlichen in radialer Richtung. Damit wirkt dieser axiale Endabschnitt des Lenkradkranzes als Speiche.

Seitlich gesehen sind die Nabe und der Kranzabschnitt durch wenigstens einen Endabschnitt des Lenkradkranzes so verbunden, dass die Nabe rückwärts axial versetzt zu einer Ebene angeordnet ist, die vom Kranzabschnitt aufgespannt wird. Insbesondere ist die Nabe im eingebauten Zustand des Fahrzeuglenkrads gegenüber dieser Ebene axial zu einer Armaturentafel hin versetzt.

Vorzugsweise ist der Lenkradkranz ausschließlich über das erste und/oder zweite axiale Ende mit der Nabe verbunden. Folglich kann auf separate Speichen vollständig verzichtet werden, wodurch sich zum einen die Skelettkonstruktion vereinfacht und zum anderen das Lenkradgewicht reduziert.

Gemäß einer weiteren Ausführungsform des Lenkradskeletts sind beide axiale Enden des Lenkradkranzes fest mit der Nabe verbunden. Dies führt zu einer besonders stabilen Anbindung des Lenkradkranzes an die Nabe.

In dieser Ausführungsform können sich beide axiale Endabschnitte im Wesentlichen in radialer Richtung erstrecken und einen Winkel von maximal 90°, vorzugsweise maximal 60° einschließen.

Ferner kann eine Strebe vorgesehen sein, die einen Übergangsbereich zwischen dem ersten Endabschnitt und dem Kranzabschnitt mit einem Übergangsbereich zwischen dem zweiten Endabschnitt und dem Kranzbereich verbindet. Diese Strebe ist insbesondere einstückig an den Lenkradkranz angeformt. Die Strebe ist bevorzugt eine nichttragende, das heißt für die Tragfähigkeitsanforderungen des Lenkradskeletts nicht notwendige Zierstrebe, die hauptsächlich der Befestigung von Verkleidungsteilen des Lenkradskeletts dient, während eine Stabilisierungs- oder Versteifungswirkung vernachlässigbar ist.

Die Endabschnitte des Lenkradkranzes erstrecken sich entweder gerade oder weisen eine Krümmung mit einem Krümmungsradius auf, der größer ist als ein Radius des Kranzabschnitts. Der Übergangsbereich ist vorzugsweise gekrümmt und weist einen Krümmungsradius auf, der kleiner ist als der Radius des Kranzabschnitts.

Die Nabe und der Lenkradkranz sind vorzugsweise einstückig ausgeführt, insbesondere als Spritzgussteil aus einer Magnesiumlegierung oder Aluminiumlegierung. Ferner ist die Nabe bevorzugt von einer Nabenplatte umgeben, wobei an der Nabenplatte beispielsweise eine Kopplungseinrichtung für ein Airbagmodul und/oder Ausgestaltungen für Hupenkontakte vorgesehen sein können.

Der Lenkradkranz kann ein Spritzgussteil mit wenigstens einer integrierten Verstärkungseinlage sein, die zum Beispiel als Rundprofil aus Stahl ausgeführt ist. Festigkeit und Stabilität des Lenkrads können auf diese Weise beeinflusst und gegebenenfalls an spezielle Anforderungen angepasst werden.

Erfindungsgemäß weist der Lenkradkranz in seiner Längsrichtung gesehen zumindest abschnittsweise einen U-förmigen Querschnitt auf. Alternativ kann der Querschnitt auch eher V-förmig und/oder abschnittsweise L-förmig ausgeführt sein.

Bevorzugt weist der Kranzabschnitt hierbei jeweils angrenzend an die beiden Endabschnitte einen U-förmigen oder V-förmigen Querschnitt mit einem Flansch und zwei gegenüberliegenden Schenkeln auf, wobei die Schenkel durch mehrere voneinander beabstandete Verstärkungsstege verbunden sind. Durch diese Stege lässt sich die Formstabilität des Lenkradskeletts und damit auch des späteren Lenkrads verbessern.

Angrenzend an jeden Endabschnitt des Lenkradkranzes können zumindest die ersten beiden, insbesondere zumindest die ersten drei Verstärkungsstege im Wesentlichen parallel angeordnet sein. Dabei erstrecken sich die parallelen Verstärkungsstege im eingebauten Zustand des Fahrzeuglenkrads in einer Lenkradgrundstellung für Geradeausfahrt vorzugsweise in Fahrzeuglängsrichtung, das heißt parallel zu einer Ebene, die von der Lenkradachse und einer 6-Uhr- bzw. 12-Uhr-Richtung (bei axialer Draufsicht auf das Lenkradskelett) aufgespannt wird. Ein die Schenkel des U-Querschnitts verbindender Flansch befindet sich auf einer "Skelettoberseite", das heißt auf einer im eingebauten Zustand des Fahrzeuglenkrads dem Fahrer zugewandten Seite. Folglich befinden sich die freien Schenkelenden des U-Querschnitts auf einer "Skelettrückseite".

Vorzugsweise ist am Kranzabschnitt ein Montagevorsprung zur Befestigung einer Bedieneinheit angeformt, insbesondere wobei sich dieser Montagevorsprung vom Kranzabschnitt weg zu einem freien Ende hin erstreckt. Der Montagevorsprung kann ein Rastelement, insbesondere einen starren Rastvorsprung aufweisen, um die Bedieneinheit am Lenkradskelett zu verrasten. Die Bedieneinheit ist in diesem Zusammenhang beispielsweise eine Multifunktions-Schaltereinheit.

Erfindungsgemäß wird die Aufgabe im Übrigen auch gelöst durch ein Fahrzeuglenkrad mit einem oben beschriebenen Lenkradskelett, wobei zumindest der Kranzabschnitt des Lenkradkranzes eine Umschäumung aufweist. Demgegenüber sind der Nabenbereich, die Endabschnitte des Lenkradkranzes und/oder optional vorgesehene Montagevorsprünge vorzugsweise nicht umschäumt.

In einer Ausführungsform des Fahrzeuglenkrad weist der Lenkradkranz in seiner Längsrichtung gesehen zumindest abschnittsweise einen U-förmigen Querschnitt mit einem Flansch und zwei gegenüberliegenden Schenkeln auf, wobei eine Lenkradkranz-Abdeckung vorgesehen ist, die auf einer dem Flansch gegenüberliegenden Seite auf den Schenkeln aufliegt und zusammen mit dem Lenkradkranz ein geschlossenes Hohlprofil bildet. Alternativ oder im Bereich eines anderen Lenkradkranzabschnitts können der Lenkradkranz und die Lenkradkranz-Abdeckung auch jeweils einen L-förmigen Querschnitt aufweisen und zusammen ein geschlossenes Hohlprofil bilden. Durch das Hohlprofil entsteht in vorteilhafter Weise ein geschützter Leitungskanal, zum Beispiel für elektrische Zuleitungen einer Bedieneinheit des Lenkrads. Aufgrund des geschlossenen Profils verbleibt im Übrigen auch beim Umschäumen ein Hohlraum im Inneren des Lenkrads, sodass Umschäumungsmaterial eingespart werden kann. Dies wirkt sich vorteilhaft auf das Gewicht und die Kosten des Fahrzeuglenkrads aus.

Ferner kann ein Gassackmodul vorgesehen sein, welches die Nabe des Lenkradskeletts abdeckt, wobei das Gassackmodul bevorzugt an einer Nabenplatte der Nabe befestigt ist.

Gemäß einer weiteren Ausführungsform des Fahrzeuglenkrads ist eine Blende vorgesehen, die wenigstens einen der Endabschnitte und/oder eine Strebe des Lenkradkranzes abdeckt.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine perspektivische Ansicht eines erfindungsgemäßen Lenkradskeletts gemäß einer Ausführungsform;
- Figur 2 eine Draufsicht des Lenkradskeletts gemäß Figur 1 mit einer abschnittsweise aufgebrachten Umschäumung;
- Figur 3 eine Draufsicht auf ein erfindungsgemäßes Fahrzeuglenkrad mit einem Lenkradskelett gemäß Figur 1;
- Figur 4 eine Draufsicht eines erfindungsgemäßen Lenkradskeletts gemäß einer weiteren Ausführungsform;
- Figur 5 die Rückansicht des Lenkradskeletts gemäß Figur 4;
- Figur 6 eine perspektivische Detailansicht einer Lenkradskelett-Rückseite gemäß Figur 5;
- Figur 7 eine Seitenansicht des Lenkradskeletts gemäß den Figuren 4 bis 6; und
- Figur 8 einen schematischen Querschnitt durch einen Kranzabschnitt eines erfindungsgemäßen Fahrzeuglenkrads.

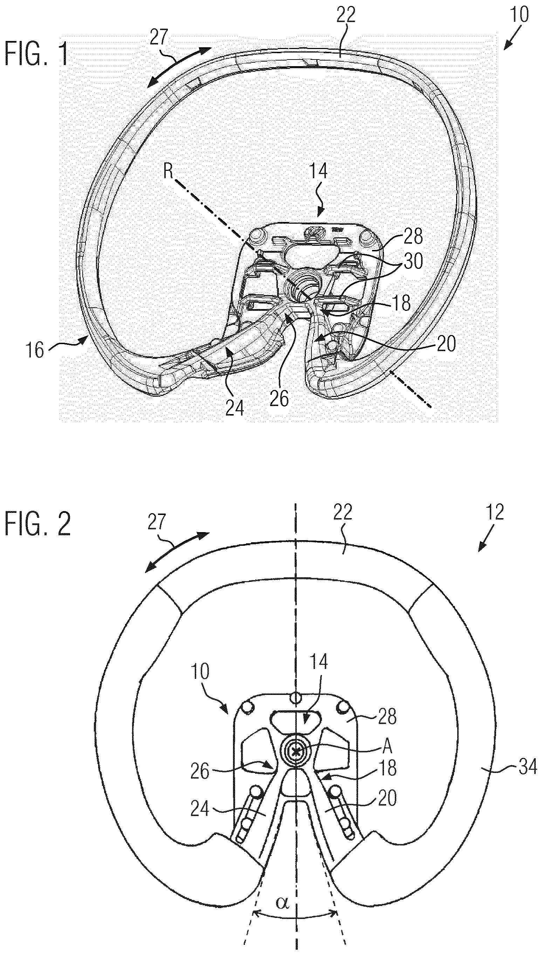

Die Figur 1 zeigt ein Lenkradskelett 10 für ein Fahrzeuglenkrad 12, mit einer Lenkradachse A, einer Nabe 14 zur Befestigung des Fahrzeuglenkrads 12 an einer um die Lenkradachse A drehbaren Lenkwelle und einem Lenkradkranz 16, der sich von einem ersten axialen Ende 18 über einen ersten axialen Endabschnitt 20, einen Kranzabschnitt 22 und einen zweiten axialen Endabschnitt 24 bis zu einem entgegengesetzten zweiten axialen Ende 26 erstreckt.

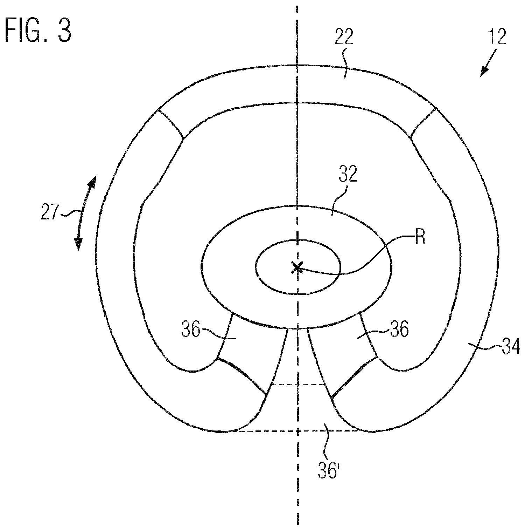

Die Nabe 14 umfasst eine Nabenplatte 28, die eine Kopplungseinrichtung 30 für ein Gassackmodul 32 (siehe Figur 3) aufweist. Ferner können an der Nabenplatte 28 auch Positionierelemente für Hupenkontakte des Fahrzeuglenkrads 12 vorgesehen sein.

Das Lenkradskelett 10 mit der Nabe 14 und dem Lenkradkranz 16 ist bevorzugt als einstückiges Metallteil, beispielsweise als Spritzgussteil aus einer Magnesium- oder Aluminiumlegierung ausgeführt, kann aber alternativ auch aus mehreren Skelettkomponenten zusammengesetzt sein. Ferner ist denkbar, dass beim Spritzgießen des Lenkradkranzes 16 Verstärkungseinlagen wie Stahlprofile integriert werden, um die Festigkeit und Stabilität des Lenkradskeletts 10 zu erhöhen.

Der Kranzabschnitt 22 ist gemäß Figur 1 radial von der Nabe 14 beabstandet und umgibt die Nabe 14 in Umfangsrichtung 27, wobei wenigstens eines der axialen Enden 18, 26 fest mit der Nabe 14 verbunden ist. Im vorliegenden Ausführungsbeispiel ist der Lenkradkranz 16 ausschließlich über die beiden axialen Enden 18, 26 mit der Nabe 14 verbunden. Die Funktion herkömmlicher Lenkradspeichen wird hier vom Lenkradkranz übernommen, sodass auf separate Lenkradspeichen verzichtet werden kann.

Die beiden axialen Endabschnitte 20, 24 erstrecken sich im Wesentlichen geradlinig in radialer Richtung zur Lenkradachse A und schließen miteinander einen Winkel α von etwa 30° ein (siehe Figur 2).

Die Figur 2 zeigt das Lenkradskelett 10 in einem mit einem Kunststoff umschäumten Zustand, wobei zumindest der Kranzabschnitt 22 des Lenkradkranzes 16 eine Umschäumung 34 aufweist.

Die Figur 3 zeigt das fertige Fahrzeuglenkrad 12 mit dem abschnittsweise umschäumten Lenkradskelett 10 sowie einem Gassackmodul 32, welches die Nabe 14 mitsamt ihrer Nabenplatte 28 abdeckt und an der Nabenplatte 28 befestigt ist. Ferner sind zwischen dem Gassackmodul 32 und der Umschäumung 34 Blenden 36 vorgesehen, welche die Endabschnitte 20, 24 des Lenkradkranzes 16 abdecken. Selbstverständlich können die Blenden 36 auch so ausgeführt sein, dass sie auch umschäumte Abschnitte des Lenkradskeletts 10 und/oder Randbereiche des Gassackmoduls 32 abdecken. Darüber hinaus ist denkbar, dass eine weitere Blende 36' vorgesehen ist (gestrichelt angedeutet), die optisch einen umlaufend geschlossenen Kranzabschnitt 22 des Lenkradskeletts 10 suggeriert, wobei diese weitere Blende 36' an die Blenden 36 angrenzt und insbesondere einstückig mit den Blenden 36 ausgeführt sein kann, sodass insgesamt nur ein einziges Blendenelement montiert werden muss.

Optional weist der Lenkradkranz 16 eine integrierte Lenkradheizung sowie eine Holz- oder Lederverkleidung auf. Ferner kann das Fahrzeuglenkrad 12 zusätzlich mit einem System, insbesondere einem kapazitiven System ausgestattet sein, das erkennt, ob und gegebenenfalls in welchem Bereich ein Fahrer den Lenkradkranz 16 anfasst. Schließlich kann das Fahrzeuglenkrad 12 auch eine Vorrichtung zur Vibrationsanregung aufweisen, die durch einen Spurhalteassistenten aktiviert wird, falls das Fahrzeug eine vorbestimmte Fahrspur verlässt.

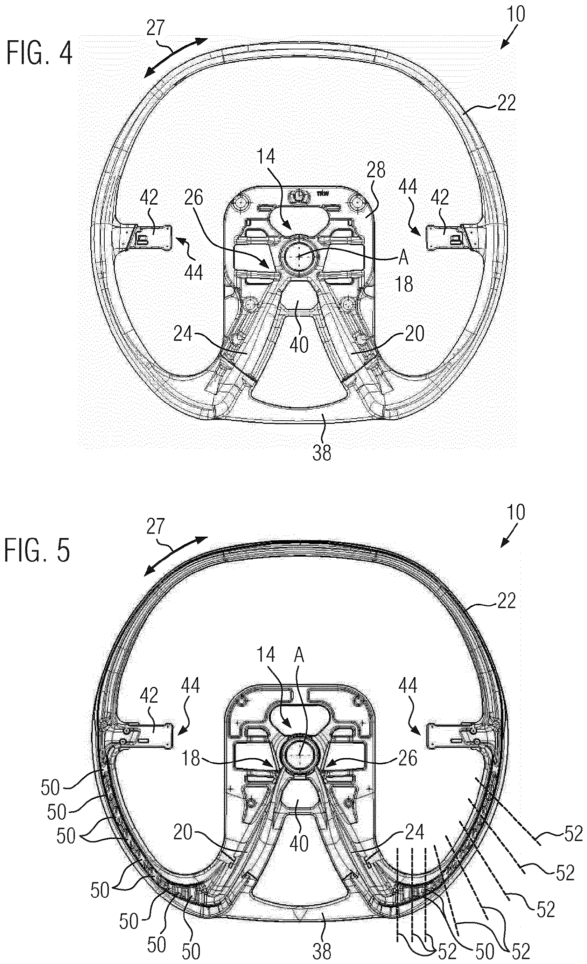

Die Figur 4 zeigt eine weitere Ausführungsform des Lenkradskeletts 10 in axialer Draufsicht. Hinsichtlich ihrer allgemeinen konstruktiven Ausgestaltung unterscheidet sich die weitere Ausführungsform nicht vom Lenkradskelett 10 gemäß den Figuren 1 bis 3, sodass diesbezüglich auf die obige Beschreibung verwiesen und im Folgenden hauptsächlich auf Unterscheidungsmerkmal eingegangen wird.

Verglichen mit Figur 1 fällt auf, dass das Lenkradskelett 10 gemäß Figur 4 eine Strebe 38 aufweist, die einen Übergangsbereich zwischen dem ersten axialen Endabschnitt 20 und dem Kranzabschnitt 22 mit einem Übergangsbereich zwischen dem zweiten axialen Endabschnitt 24 und dem Kranzabschnitt 22 verbindet.

Im dargestellten Ausführungsbeispiel ist angrenzend an die Nabe 14 noch eine weitere Strebe 40 vorgesehen, sodass das Lenkradskelett 10 insgesamt zwei Streben 38, 40 aufweist.

Diese Streben 38, 40 sind insbesondere einstückig an den Lenkradkranz 16 angeformt. Ferner sind die Streben 38, 40 ist nichttragende, das heißt für die Tragfähigkeitsanforderungen des Lenkradskeletts 10 nicht notwendige Zierstreben, die hauptsächlich der Befestigung der Blenden 36, 36' am Lenkradskelett 10 dienen.

Ferner sind gemäß Figur 4 am Kranzabschnitt 22 zwei Montagevorsprünge 42 zur Befestigung einer Bedieneinheit angeformt, wobei sich die Montagevorsprünge 42 jeweils vom Kranzabschnitt 22 weg zu einem freien Ende 44 hin erstrecken.

Im Übrigen lässt sich der Figur 4 entnehmen, dass der Kranzabschnitt 22 des Lenkradskeletts 10 eine geringere Querschnittsfläche aufweist als die axialen Endabschnitte 20, 24 des Lenkradskeletts 10. Insbesondere hat der Kranzabschnitt 22 in der Draufsicht bei 12 Uhr eine geringere Querschnittsfläche als bei 2 Uhr und bei 2 Uhr wiederum eine geringere Querschnittsfläche als bei 4 Uhr.

Gemäß einer speziellen Ausführungsvariante des Lenkradskeletts 10 nimmt die Querschnittsfläche des Kranzabschnitts 22 ohne Berücksichtigung der Montagevorsprünge 42 vom jeweiligen axialen Endabschnitt 20, 24 bis zu einer in der Draufsicht definierten 12-Uhr-Position kontinuierlich ab.

Mit der beschriebenen Querschnittsveränderung lassen sich die Stabilitätsanforderungen für ein Fahrzeuglenkrad 12 in vorteilhafter Weise mit minimalem Materialbedarf erfüllen.

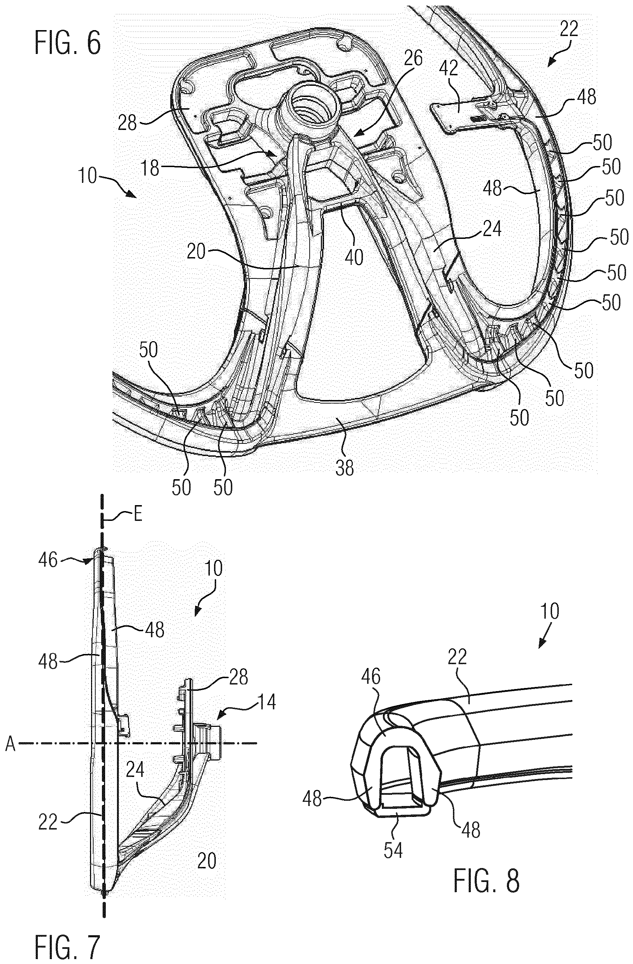

Die Figuren 5 und 6 zeigen eine Rückseite des Lenkradskeletts 10 gemäß Figur 4. Dabei lässt sich erkennen, dass der Lenkradkranz 16 in seiner Längsrichtung gesehen zumindest abschnittsweise einen U-förmigen Querschnitt aufweist.

Der Kranzabschnitt 22 weist jeweils angrenzend an die beiden Endabschnitte 20, 24 einen U-förmigen Querschnitt mit einem Flansch 46 und zwei gegenüberliegenden Schenkeln 48 auf, wobei die Schenkel 48 durch mehrere voneinander beabstandete Verstärkungsstege 50 verbunden sind.

In Figur 5 sind gestrichelte Linien 52 eingezeichnet, um die Längsrichtung der Verstärkungsstege 50 besser erkennen zu können. Insbesondere anhand der Linien 52 wird deutlich, dass angrenzend an jeden Endabschnitt 20, 24 zumindest die ersten beiden, im vorliegenden Ausführungsbeispiel die ersten drei Verstärkungsstege 50 im Wesentlichen parallel angeordnet sind. Es hat sich herausgestellt, dass auf diese Weise mit minimalem Materialeinsatz eine gewünschte Stabilität des Fahrzeuglenkrads 12 erreicht wird.

Um weiter Gewicht zu sparen sind hier die Verstärkungsstege 50 nur in einem unteren Bereich des Lenkradkranzes 16, insbesondere zwischen den axialen Endabschnitten 20, 24 und den Montagevorsprüngen 42 vorgesehen, also in axialer Draufsicht einem Bereich zwischen 3 Uhr und 9 Uhr.

Ein oberer Bereich des Lenkradkranzes 16, insbesondere ein Bereich zwischen 9 Uhr und 3 Uhr, insbesondere zwischen den Montagevorsprüngen 42, ist vorzugsweise stegfrei ausgebildet.

Die Figur 8 zeigt einen Querschnitt des Fahrzeuglenkrad 12 im Bereich des Kranzabschnitts 22, wobei eine Lenkradkranz-Abdeckung 54 vorgesehen ist, die auf einer dem Flansch 46 gegenüberliegenden Seite auf den Schenkeln 48 des Lenkradskeletts 10 aufliegt und zusammen mit dem Lenkradkranz 16 des Lenkradskeletts 10 ein geschlossenes Hohlprofil bildet.

Schließlich zeigt die Figur 7 eine Seitenansicht des Lenkradskeletts 10 gemäß den Figuren 4 bis 6. Hierbei wird deutlich, dass die Nabe 14 und der Kranzabschnitt 22 des Lenkradskeletts 10 durch die Endabschnitte 20, 24 des Lenkradkranzes 16 so verbunden sind, dass die Nabe 14, insbesondere die Nabenplatte 28, axial versetzt zu einer Ebene E angeordnet ist, die vom Kranzabschnitt 22 aufgespannt wird. Dabei ist die Nabe 14 des Fahrzeuglenkrads 12 gegenüber der Ebene E axial zur Skelettrückseite hin versetzt. Somit ist die Nabe 14 im eingebauten Zustand des Fahrzeuglenkrads 12 gegenüber der Ebene E axial zu einer Armaturentafel hin versetzt.

Die Schenkel 48 des U-förmigen Skelettquerschnitts sind im Bereich des Kranzabschnitts 22 angrenzend an die axialen Endabschnitte 20, 24 etwa gleich lang (siehe auch Figur 8). Anhand der Figur 7 wird jedoch deutlich, dass der radial äußere Schenkel 48 des U-förmigen Skelettquerschnitts in axialer Draufsicht von der 3-Uhr-Position bis zur 12-Uhr-Position bzw. von der 9-Uhr-Position bis zur 12-Uhr-Position kontinuierlich kürzer wird und in der 12-Uhr-Position seine minimale Länge erreicht.

## Patentansprüche

1. Lenkradskelett für ein Fahrzeuglenkrad (12), mit
einer Lenkradachse (A),
einer Nabe (14) zur Befestigung des Fahrzeuglenkrads (12) an einer um die Lenkradachse (A) drehbaren Lenkwelle, und
einem Lenkradkranz (16), der sich von einem ersten axialen Ende (18) über einen ersten axialen Endabschnitt (20), einen Kranzabschnitt (22) und einen zweiten axialen Endabschnitt (24) bis zu einem entgegengesetzten zweiten axialen Ende (26) erstreckt,
wobei der Kranzabschnitt (22) radial von der Nabe (14) beabstandet ist sowie die Nabe (14) in Umfangsrichtung (27) umgibt, und
wobei wenigstens ein axiales Ende (18, 26) des Lenkradkranzes (16) fest mit der Nabe (14) verbunden ist
**dadurch gekennzeichnet, dass** der Lenkradkranz (16) in seiner Längsrichtung gesehen zumindest abschnittsweise einen U-förmigen Querschnitt aufweist.

2. Lenkradskelett nach Anspruch 1, **dadurch gekennzeichnet, dass** sich wenigstens ein axialer Endabschnitt (20, 24) im Wesentlichen in radialer Richtung erstreckt.

3. Lenkradskelett nach wenigstens einem der vorhergehenden Ansprüche, **dadurch gekennzeichnet, dass** der Lenkradkranz (16) ausschließlich über das erste und/oder zweite axialen Ende (18, 26) mit der Nabe (14) verbunden ist.

4. Lenkradskelett nach wenigstens einem der vorhergehenden Ansprüche, **dadurch gekennzeichnet, dass** beide axialen Enden (18, 26) des Lenkradkranzes (16) fest mit der Nabe (14) verbunden sind.

5. Lenkradskelett nach Anspruch 4, **dadurch gekennzeichnet, dass** sich beide axialen Endabschnitte (20, 24) im Wesentlichen in radialer Richtung erstrecken und einen Winkel (α) von maximal 90°, vorzugsweise maximal 60° einschließen.

6. Lenkradskelett nach Anspruch 4 oder 5, **dadurch gekennzeichnet, dass** eine Strebe (38) vorgesehen ist, die einen Übergangsbereich zwischen dem ersten axialen Endabschnitt (20) und dem Kranzabschnitt (22) mit einem Übergangsbereich zwischen dem zweiten axialen Endabschnitt (24) und dem Kranzabschnitt (22) verbindet.

7. Lenkradskelett nach wenigstens einem der vorhergehenden Ansprüche, **dadurch gekennzeichnet, dass** die Nabe (14) und der Lenkradkranz (16) einstückig ausgeführt sind.

8. Lenkradskelett nach wenigstens einem der vorhergehenden Ansprüche, **dadurch gekennzeichnet, dass** der Lenkradkranz (16) ein Spritzgussteil mit wenigstens einer integrierten Verstärkungseinlage ist.

9. Lenkradskelett nach wenigstens einem der vorhergehenden Ansprüche, **dadurch gekennzeichnet, dass** der Kranzabschnitt (22) jeweils angrenzend an die beiden Endabschnitte (20, 24) einen U-förmigen Querschnitt mit einem Flansch (46) und zwei gegenüberliegenden Schenkeln (48) aufweist, wobei die Schenkel (48) durch mehrere voneinander beabstandete Verstärkungsstege (50) verbunden sind.

10. Lenkradskelett nach Anspruch 9, **dadurch gekennzeichnet, dass** angrenzend an jeden Endabschnitt (20, 24) zumindest die ersten drei Verstärkungsstege (50) im Wesentlichen parallel angeordnet sind.

11. Lenkradskelett nach wenigstens einem der vorhergehenden Ansprüche, **dadurch gekennzeichnet, dass** am Kranzabschnitt (22) wenigstens ein Montagevorsprung (42) zur Befestigung einer Bedieneinheit angeformt ist, insbesondere wobei sich der Montagevorsprung (42) vom Kranzabschnitt (22) weg zu einem freien Ende (44) hin erstreckt.

12. Fahrzeuglenkrad mit einem Lenkradskelett (10) nach wenigstens einem der vorhergehenden Ansprüche, **dadurch gekennzeichnet, dass** zumindest der Kranzabschnitt (22) des Lenkradkranzes (16) eine Umschäumung (34) aufweist.

13. Fahrzeuglenkrad nach Anspruch 12, **dadurch gekennzeichnet, dass** der Lenkradkranz (16) in seiner Längsrichtung gesehen zumindest abschnittsweise einen U-förmigen Querschnitt mit einem Flansch (46) und zwei gegenüberliegenden Schenkeln (48) aufweist, wobei eine Lenkradkranz-Abdeckung (54) vorgesehen ist, die auf einer dem Flansch (46) gegenüberliegenden Seite auf den Schenkeln (48) aufliegt und zusammen mit dem Lenkradkranz (16) ein geschlossenes Hohlprofil bildet.

14. Fahrzeuglenkrad nach Anspruch 12 oder 13, **dadurch gekennzeichnet, dass** ein Gassackmodul (32) vorgesehen ist, welches die Nabe (14) des Lenkradskeletts (10) abdeckt.

15. Fahrzeuglenkrad nach wenigstens einem der Ansprüche 12 bis 14, **dadurch gekennzeichnet, dass** eine Blende (36, 36') vorgesehen ist, die wenigstens einen der Endabschnitte (20, 24) und/oder eine Strebe (38, 40) des Lenkradkranzes (16) abdeckt.

## Claims

1. A steering wheel skeleton for a vehicle steering wheel (12) comprising
a steering wheel axis (A),
a hub (14) for fastening the vehicle steering wheel (12) on a steering shaft rotatable about the steering wheel axis (A), and
a steering wheel rim (16) extending from a first axial end (18) via a first axial end portion (20), a rim portion (22) and a second axial end portion (24) to an opposite second axial end (26),
wherein the rim portion (22) is radially spaced apart from the hub (14) and surrounds the hub (14) in circumferential direction (27), and
wherein at least one axial end (18, 26) of the steering wheel rim (16) is tightly connected to the hub (14),
**characterized in that** the steering wheel rim (16) at least in portions includes a U-shaped cross-section, when viewed in its longitudinal direction.

2. The steering wheel skeleton according to claim 1, **characterized in that** at least one axial end portion (20, 24) extends substantially in the radial direction.

3. The steering wheel skeleton according to at least one of the preceding claims, **characterized in that** the steering wheel rim (16) is connected to the hub (14) exclusively via the first and/or second axial end (18, 26).

4. The steering wheel skeleton according to at least one of the preceding claims, **characterized in that** both axial ends (18, 26) of the steering wheel rim (16) are tightly connected to the hub (14).

5. The steering wheel skeleton according to claim 4, **characterized in that** both axial end portions (20, 24) extend substantially in radial direction and enclose an angle (α) of 90° maximum, preferably 60° maximum.

6. The steering wheel skeleton according to claim 4 or 5, **characterized in that** a brace (38) is provided for connecting a transition area between the first axial end portion (20) and the rim portion (22) to a transition area between the second axial end portion (24) and the rim portion (22).

7. The steering wheel skeleton according to at least one of the preceding claims, **characterized in that** the hub (14) and the steering wheel rim (16) are designed in one piece.

8. The steering wheel skeleton according to at least one of the preceding claims, **characterized in that** the steering wheel rim (16) is an injection molded part including at least one integrated reinforcing insert.

9. The steering wheel skeleton according to at least one of the preceding claims, **characterized in that**, adjacent to each of the two end portions (20, 24), the rim portion (22) has a U-shaped cross-section including a flange (46) and two opposite legs (48), wherein the legs (48) are connected by plural spaced reinforcing lands (50).

10. The steering wheel skeleton according to claim 9, **characterized in that**, adjacent to each end portion (20, 24) at least the first three reinforcing lands (50) are arranged substantially in parallel.

11. The steering wheel skeleton according to at least one of the preceding claims, **characterized in that** at least one mounting projection (42) for fastening an operating unit is formed on the rim portion (22), especially wherein the mounting projection (42) extends away from the rim portion (22) towards a free end (44).

12. A vehicle steering wheel comprising a steering wheel skeleton (10) according to at least one of the preceding claims, **characterized in that** at least the rim portion (22) of the steering wheel rim (16) includes a foam coating (34).

13. The vehicle steering wheel according to claim 12, **characterized in that** the steering wheel rim (16), viewed in its longitudinal direction, at least in portions has a U-shaped cross-section comprising a flange (46) and two opposite legs (48), wherein a steering wheel rim cover (54) is provided which rests on a side opposed to the flange (46) on the legs (48) and forms a closed hollow section together with the steering wheel rim (16).

14. The vehicle steering wheel according to claim 12 or 13, **characterized in that** an airbag module (32) is provided covering the hub (14) of the steering wheel skeleton (10).

15. The vehicle steering wheel according to at least one of the claims 12 to 14, **characterized in that** a cover plate (36, 36') is provided covering at least one of the end portions (20, 24) and/or one brace (38, 40) of the steering wheel rim (16).

## Revendications

1. Armature de volant pour volant de véhicule (12), avec
un arbre de direction (A),
un moyeu (14) pour fixer le volant de véhicule (12) à une colonne de direction pouvant tourner autour de l'arbre de direction (A), et
une jante de volant (16) qui s'étend d'une première extrémité axiale (18) via une première section d'extrémité axiale (20), une section de jante (22) et une deuxième section d'extrémité axiale (24) jusqu'à une deuxième extrémité axiale opposée (26),
pour lequel la section de jante (22) est espacée radialement du moyeu (14) et entoure ainsi le moyeu (14) dans la direction circonférentielle (27), et
pour lequel au moins une extrémité axiale (18, 26) de la jante de volant (16) est solidaire du moyeu (14)
**caractérisé en ce que** la jante de volant (16) a une section transversale en forme de U, au moins en sections, vue dans sa direction longitudinale.

2. Armature de volant selon la revendication 1, **caractérisé en ce qu'**au moins une section d'extrémité axiale (20, 24) s'étend essentiellement dans la direction radiale.

3. Armature de volant selon au moins l'une des revendications précédentes, **caractérisé en ce que** la jante de volant (16) est reliée au moyeu (14) exclusivement par la première et / ou la deuxième extrémité axiale (18, 26).

4. Armature de volant selon au moins l'une des revendications précédentes, **caractérisé en ce que** les deux extrémités axiales (18, 26) de la jante de volant (16) sont solidaires du moyeu (14).

5. Armature de volant selon la revendication 4, **caractérisé en ce que** les deux sections d'extrémités axiales (20, 24) s'étendent essentiellement dans la direction radiale et comportent un angle (a) d'un maximum de 90 °, de préférence d'un maximum de 60 °.

6. Armature de volant selon la revendication 4 ou 5, **caractérisé en ce qu'**il est prévu un montant (38) qui relie une zone de transition entre la première section d'extrémité axiale (20) et la section de jante (22) avec une zone de transition entre la seconde section d'extrémité axiale (24) et la section de jante (22).

7. Armature de volant selon au moins l'une des revendications précédentes, **caractérisé en ce que** le moyeu (14) et la jante de volant (16) sont réalisés d'une seule pièce.

8. Armature de volant selon au moins l'une des revendications précédentes, **caractérisé en ce que** la jante de volant (16) est une pièce moulée par injection avec au moins un insert de renfort intégré.

9. Armature de volant selon au moins l'une des revendications précédentes, **caractérisé en ce que** la section de jante (22) attenante à chacune des deux sections d'extrémité (20, 24) possède une section transversale en forme de U avec un flasque (46) et deux pattes opposées (48), pour lequel les pattes (48) sont reliées par une pluralité de nervures de renfort espacées (50).

10. Armature de volant selon la revendication 9, **caractérisé en ce qu'**au moins les trois premières nervures de renfort (50) sont disposées sensiblement parallèlement à chaque section d'extrémité (20, 24).

11. Armature de volant selon au moins l'une des revendications précédentes, **caractérisé en ce qu'**au moins une saillie de montage (42) pour la fixation d'une unité de commande est formée sur la section de jante (22), en particulier pour lequel la saillie de montage (42) s'étend vers l'extérieur en s'éloignant de la section de jante (22) vers une extrémité libre (44).

12. Volant de véhicule avec une armature de de volant (10) selon au moins l'une des revendications précédentes, **caractérisé en ce qu'**au moins la section de jante (22) de la jante de volant (16) présente un revêtement en mousse (34).

13. Volant de véhicule selon la revendication 12, **caractérisé en ce que** la jante de volant (16), vue dans sa direction longitudinale, présente au moins partiellement une section transversale en forme de U avec un flasque (46) et deux pattes opposées (48), pour lequel est prévu un couvre-jante de volant (54), lequel repose sur un côté opposé du flasque (46) sur les pattes (48) et forme ensemble avec la jante de volant (16) un profil creux fermé.

14. Volant de véhicule selon la revendication 12 ou 13, **caractérisé en ce qu'**il est prévu un module de coussin gonflable (32) qui recouvre le moyeu (14) de l'armature de volant (10).

15. Volant de véhicule selon au moins l'une des revendications 12 à 14, **caractérisé en ce qu'**il est prévu un couvercle (36, 36'), lequel couvre au moins l'une des sections d'extrémité (20, 24) et / ou un montant (38, 40) de la jante de volant (16).
